Europäisches Patentamt

European Patent Office

Office européen des brevets

(19)

(11) Publication number:

**0 309 219**
**A1**

## EUROPEAN PATENT APPLICATION

(12)

(21) Application number: 88308744.7

(51) Int. Cl.⁴: **B 01 J 29/38**

(22) Date of filing: 21.09.88

(30) Priority: 25.09.87 US 101093

(43) Date of publication of application:
29.03.89 Bulletin 89/13

(84) Designated Contracting States:
BE DE FR GB IT NL

(71) Applicant: MOBIL OIL CORPORATION
150 East 42nd Street
New York New York 10017 (US)

(72) Inventor: Owen, Hartley
5 Riverview Terrace
Belle Mead New Jersey 08502 (US)

(74) Representative: Colmer, Stephen Gary
Patent Department c/o Mobil Services Company Limited
Mobil Court 3 Clements Inn
London WC2A 2EB (GB)

(54) Hydrogen reactivation of zeolite cracking and conversion catalysts.

(57) This invention describes a process for the reactivation of zeolite type FCC and olefins or oxygenates conversion catalysts comprising:
contacting under heat transfer and reducing conditions a hydrogen feed stream at low temperature and a fluidized catalyst stream comprising FCC zeolite type catalyst particles at elevated temperature from an FCC process unit;
separating the combined hydrogen and FCC catalyst stream into a first portion stream comprising partially reduced FCC catalyst and a second portion stream comprising substantially hydrogen at elevated temperature;
mixing under aromatizing conditions the first portion stream and the catalyst fluidizing lift stream comprising light hydrocarbon feed gas and feeding to a gas oil FCC reactor;
contacting under reactivating conditions in a reactivating zone the second portion stream at elevated temperature and substantially coked and carbonaceous zeolite type oxygenates or olefins conversion catalyst from a conversion reactor;
withdrawing reactivating conversion catalyst from the reactivating zone and returning the reactivating catalyst to the conversion reactor under conversion conditions.

EP 0 309 219 A1

**Description**

## HYDROGEN REACTIVATION OF ZEOLITE CRACKING AND CONVERSION CATALYSTS

This invention relates to a process for integrating the hydrogen reactivation of crystalline aluminosilicate catalysts used in the conversion of lower alkyl oxygenates and olefins with a fluid catalytic cracking process by utilizing heat recovery from FCC catalysts as the hydrogen heat source.

Crystalline aluminosilicate zeolite catalysts have found wide application and commerical success in a growing number of important petroleum and chemical conversion refining processes. These catalysts, particularly those characterized as synthetic medium pore zeolites such as ZSM-5, have been found uniquely useful and extraordinary for the conversion of oxygenates such as methanol to gasoline and olefins, the aromatization of light paraffins, olefins and naphthenes, as well as for many fluidized catalytic cracking applications. The currency of the usefulness of these processes employing medium pore zeolites has improved substantially in recent years driven, in the case of the methanol to gasoline (MTG) process, by the availability of coal derived methanol as a feed stock to produce gasoline and, in the case of enhancing aromatization in some fluid catalytic cracking (FCC) applications, by the need to increase a refinery's octane-enriching pool. Indeed, octane enhancement and the application of refinery processes directed thereto is a dominant occupation of those engaged in the petroleum refining art of the present day as the industry strives to replace lead-additives octane enhancing technology and to meet the high octane requirements of more efficient internal combustion engine designs. Accordingly, workers in the field are challenged by the requirement to further improve those processes employing zeolite type catalysts found to be useful in producing petroleum fractions of higher octane enriching composition, particularly aromatic hydrocarbons which make up about 21% of the gasoline pool.

In recent years, studies in the development of aromatization processes based on the ZSM-5 aluminosilicate catalyst led to the development of a process, sometimes known generically as M2-Forming, which converts light paraffin, olefins and naphthenes to aromatics and light gases in high yield as described by Chen et al in Ind. Eng. Chem. Process Dev. 1986, 25, 151-155. For instance, it has been shown that the M2-Forming process employing a virgin naphtha which contains 47% paraffins, 41% naphthenes and 12% aromatics gives 44% aromatics or a net gain of 32%, and a light FCC gasoline which contains 41% olefins and 10% aromatics gives 54% aromatics or a net gain of more than 44% aromatics. In the M2-Forming process, as in the aforementioned methanol-to-gasoline, methanol-to- olefins and FCC applications of zeolite type catalysts, the catalysts are regenerated in conventional manner by contacting the catalyst at elevated temperature with an oxygen containing gas such as air to effect the controlled burning of coke from the deactivated catalyst. However, catalyst regeneration by controlled burning of coke produces water and carbon dioxide. Water at high temperature can permanently destroy the structure of the zeolite catalyst and thus can actually diminish catalyst activity in M2-Forming and related processes. Further, it is very difficult to selectively control the degree of coke and carbonaceous deposits from the catalyst when employing a combustion regeneration process. In the case of certain FCC processes employing zeolite catalysis metals such as platinum, palladium, and vanadium are often added to the catalyst to promote aromatization and other upgrading reactions. During oxygen regeneration of such zeolites, the added metals are converted to their oxides and their intended catalytic effectiveness is substantially reduced.

In the prior art, several approaches have been reported toward improved processes to regenerate zeolite catalysts. Bowles, (U.S. Patent 3,412,013) teaches contacting a zeolite catalyst with a hydrogen containing gas at temperatures of about 900°F to 1400°F. Haag et al (U.S. Patents 4,508,836 and 4,358,395) teaches the regeneration of deactiviated ZSM-5 type catalyst by contacting spent catalyst with hydrogen gas at a temperature of about 800°F to 1200°F. The Bowles patent teaches the method and means for catalytically cracking hydrocarbons in a dilute suspension while regenerating catalyst in a fluidized dense bed with hydrogen rich gas. Bowles does not teach how such regeneration may be advantageously achieved in a combination of processes utilizing available high temperature heat sources to provide the requisite hydrogen heat. The Haag et al disclosures teach hydrogen regeneration of a precoked catalyst, indicating a refinery stream such as hydrocracker effluent may be used as a hydrogen source. The Haag disclosure teaches fixed bed regeneration, leaving undisclosed other advantageous routes to the energy and hydrogen requirements for regeneration as well as beneficial integration with other processes.

From the foregoing it is evident that there is a continuing need to develop additional catalyst regeneration procedures which can be used to improve oxygenates and hydrocarbon conversion processes, particularly those catalyzed by zeolite type catalysts.

In accordance with the present invention, a process has been discovered for the reactivation of zeolite type FCC and olefins or oxygenates conversion catalysts comprising, contacting under heat transfer and reducing conditions a substantially hydrogen feed stream of reduced temperature and a fluidized catalyst stream comprising FCC zeolite type catalyst particles at elevated temperature from an FCC process unit; separating the combined hydrogen and FCC catalyst stream into a first portion stream comprising partially reduced FCC catalyst and a second portion stream comprising substantially hydrogen at elevated temperatures; mixing under aromatizing conditions the first portion stream and the catalyst fluidizing lift stream comprising light hydrocarbon feed gas to a gas oil FCC reactor; contacting under reactivating conditions in a reactivating zone the second portion stream at elevated temperature and substantially coked and carbonaceous zeolite type oxygenates or olefins conversion catalyst from a conversion reactor; withdrawing the reactivated conversion catalyst from the regenerating zone and returning the reactivated catalyst to the conversion reactor under conversion conditions to produce aromatics rich or olefins-rich products.

It has been found that the utilization of high temperature FCC regenerated catalysts as a heat source for heating hydrogen used to reactivate oxygenates or olefins conversion catalysts results in chemical reduction of heavy metal oxides deposited on the regenerated FCC catalyst enhancing the efficacy of that catalyst upon recycle to the FCC catalyst feed stream.

It has further been found that spent, i.e., preregenerated, zeolite FCC catalysts can also be employed as the high temperature heat source to heat hydrogen for reactivation of ZSM-5 catalysts. The utilization of spent FCC catalyst prior to regeneration leads to further efficacious results in the recovery of valuable hydrocarbons entrained therein which, typically, would be destroyed and lost in the FCC regeneration reactor. Hydrogen reactivation of the ZSM-5 catalyst is accomplished by stripping coke and carbonaceous deposits in a substantially hydrogen stream at temperatures between 482°C to 760°C (900°F to 1400°F).

In another process of the present invention the reactivation of ZSM-5 type oxygenates or olefins conversion catalysts comprises contacting a substantially hydrogen stream of reduced temperature and a fluidized catalyst stream comprising FCC catalyst particles at elevated temperature from an FCC process unit; separating the combined hydrogen and FCC catalyst stream into a first portion stream comprising FCC catalyst and a second portion stream comprising substantially hydrogen at elevated temperatures; returning the FCC catalyst stream to the FCC process unit; contacting under reactivating conditions in a reactivating zone the second portion stream at elevated temperature and substantially coked and carbonaceous ZSM-5 zeolite catalyst from an olefins or oxygenates conversion reactor; withdrawing regenerated ZSM-5 catalyst from the regenerating zone and returning the catalyst to the conversion reactor under conversion conditions.

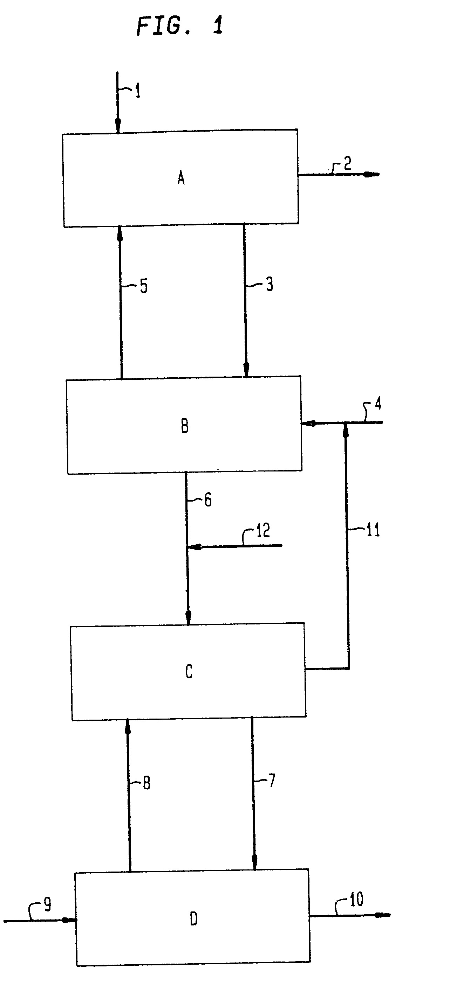

In the drawings, Figure 1 is a simplified process flow diagram showing relationships between the major unit operations.

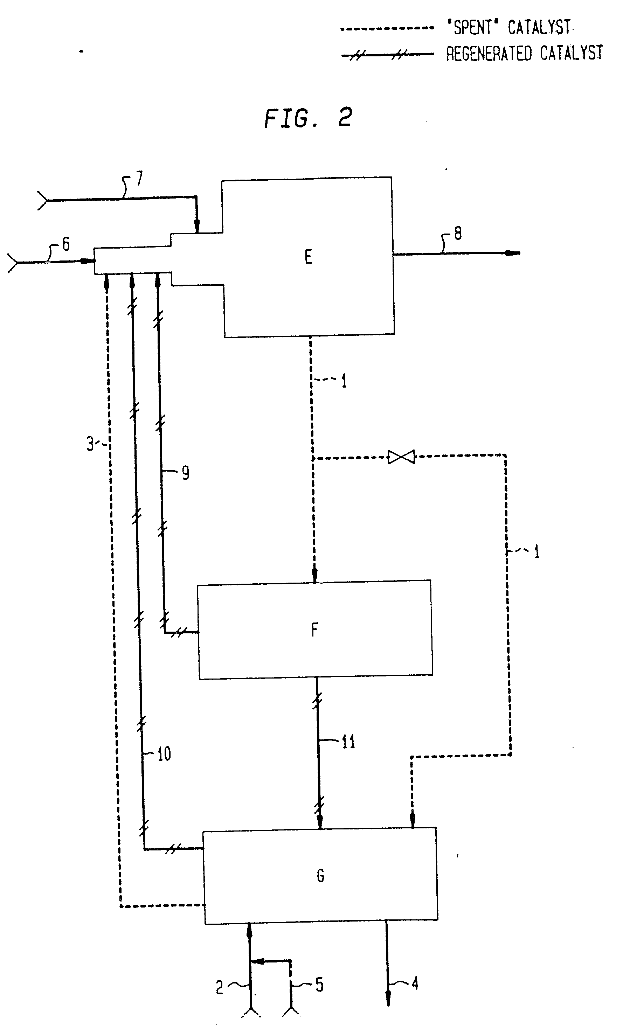

Figure 2 is a further simplified process flow diagram expanding the relationships between the FCC process unit and other major unit operations embodied in the invention.

Through the invention described herein a wide range of processes may be combined with FCC to reactivate zeolite catalysts in the presence of hydrogen. Such processes employing zeolites encompass hydrocracking and reforming, aromatization, isomerization, the conversion of synthesis gas, alkylations, and the conversion of lower aliphatic oxygenates to olefins, gasoline or distillate. The invention is particularly and preferably applied to those processes combining FCC with methanol to gasoline, methanol to olefins and the conversion of light paraffins, olefins and naphthenes to aromatics and light gases as well as the conversion of olefins to gasoline and distillate. These processes are sometimes known in the art as MTG, MTO, M2-FORMING, and MOGD.

MOGD is a preferred and illustrative process for integrating with FCC through the discoveries of the instant invention. The MOGD process upgrades $C_2$ to $C_{10}$ olefinic stocks to give high gasoline plus distillate yields while providing flexibility in product mix. The process employs a zeolite type catalyst, generally in a fixed bed configuration. The process is described in U.S. Patent Nos. 3,960,978 and 4,021,502 to Plank, Rosinski and Givens; in U.S. Patent No. 4,450,311 to Wright et al, and U.S. Patent Nos. 4,150,062, 4,211,650 and 4,227,992 to Garwood et al. Conventionally, spent catalyst containing coke and carbonaceous deposits is regenerated by burning off the deposits in the presence of air. While fixed bed processing and the use of alternate or swing reactors for catalyst regeneration is more typically representative of the manner in which the MOGD and the aforementioned conversion processes are practiced, the use of fluidized bed process configurations for feedstock conversion and catalyst regeneration are known and applicable to these processes and the selection of the preferred fixed or fluidized bed configuration is left to the prerogative of those knowledgable and skilled in the art according to the contingencies of the application. However, the discovery to which this invention is addressed is equally applicable to fixed or fluidized bed conversion processes and fixed or fluidized bed processes for catalyst generation thereof.

Fluid catalytic cracking (FCC), as noted heretofore, is well known and thoroughly described in the prior art. In that process, spent catalyst exiting the cracking reactor and frequently carrying significant quantities of entrained light hydrocarbon product may be partly stripped and cycled to a catalyst regeneration unit where coke and carbonaceous deposits on the catalyst are burned off in the presence of air. In a typical configuration the regenerated catalyst is then recycled back to the reactor, in part through a catalyst lift stream generally comprising light hydrocarbon products. Commonly, as a consequence of the heat of combustion generated in the removal of coke and carbonaceous deposits the catalyst is recycled at a temperature considerably higher than the temperature of spent catalyst exiting from the isothermal cracking reactor and may contribute to the heat requirements of the endothermic cracking reaction. The recirculating catalyst is often a zeolite type and X-zeolite and Y-zeolite are frequently preferred. For the purposes of the instant invention those FCC processes employing X or Y type zeolite catalysts are preferred for the inventive process integration described herein. However, a wide range of catalyst are used in FCC processes and are also useful and adaptable to the discovery described herein. Of particular applicability and usefulness in the instant invention are those FCC processes employing as catalysts a zeolite type incorporating platinum group metals deposited thereon. As described in U.S. Patent 4,174,272 to Schwartz, such metal deposits have proved useful in improving the overall performance of FCC processes and such process derive a particular benefit from the present invention.

The aforesaid catalysts employed in conversion processes and undergoing reactivation in accordance with the method described herein comprise crystalline aluminosilicate zeolites which are members of a novel class of zeolites exhibiting some unusual properties. These zeolites produce profound transformation of aliphatic hydrocarbons to aromatic hydrocarbons in commercially desirably yields and can transform light aliphatic oxygenates to olefins and gasoline. Although they have unusually low alumina contents, i.e., high silica to alumina ratios, they are very active even when the silica to alumina ratio exceeds 30.

An important characteristic of the crystal structure of this class of zeolites is that it provides constrained access to, and egress from the intracrystalline free space by virtue of having a pore dimension greater than about 5 angstroms and pore windows of about a size such as would be provided by 10-membered rings of silicon atoms interconnected by oxygen. It is to be understood, of course, that these rings are those formed by the regular disposition of the tetrahedra making up the anionic framework of the crystalline zeolite, the oxygen atoms themselves being bonded to the silicon or aluminum atoms at the centers of the tetrahedra. Briefly, the preferred type zeolites useful in this invention possess, in combination: a silica to alumina mole ratio of at least about 12; and a structure providing constrained access to the intracrystalline free space.

The silica to alumina mole ratio referred to may be determined by conventional analysis. This ratio is meant to represent, as closely as possible, the ratio in the rigid anionic framework of the zeolite crystal and to exclude aluminum in the binder or in cationic or other form within the channels. Although zeolites with a silica to alumina mole ratio of at least 12 are useful, it is preferred to use zeolites having higher ratios of at least about 30. Such zeolites, after activation, acquire an intracrystalline sorption capacity for normal hexane which is greater than that for water, i.e., they exhibit "hydrophobic" properties. It is believed that this hydrophobic character is advantageous in the present invention.

The type zeolites useful in this invention freely sorb normal hexane and have a pore dimension greater than about 5 Angstroms. In addition, the structure must provide constrained access to larger molecules. It is sometimes possible to judge from a known crystal structure whether such constrained access exists. For example, if the only pore windows in a crystal are formed by 8-membered rings of silicon and aluminum atoms, then access by molecules of larger cross-section than normal hexane is excluded and the zeolite is not of the desired type. Windows of 10-membered rings are preferred, although, in some instances, excessive puckering or pore blockage may render these zeolites ineffective. Twelve-membered rings do not generally appear to offer sufficient constraint to produce the advantageous conversions, although puckered structures exist such as TMA Offretite which is a known effective zeolite. Also, structures can be conceived, due to pore blockage or other cause, that may be operative.

Rather than attempt to judge from crystal structure whether or not a zeolite possesses the necessary constrained access, a simple determination of the "constraint index" may be made by passing continuously a mixture of an equal weight of normal hexane and 3-methylpentane over a sample of zeolite at atmospheric pressure according to the following procedure. A sample of zeolite, in the form of pellets or extrudate, is crushed to a particle size about that of coarse sand and mounted in a glass tube. Prior to testing, the zeolite is treated with a stream of air at 1000°F for at least 15 minutes. The zeolite is then flushed with helium and the temperature adjusted between 550°F and 950°F to give an overall conversion between 10% and 60%. The mixture of hydrocarbons is passed at a 1 liquid hourly space velocity (i.e., 1 volume of liquid hydrocarbon per volume of zeolite per hour) over the zeolite with a helium dilution to give a helium to total hydrocarbon mole ratio of 4:1. After 20 minutes on stream, a sample of the effluent is taken and analyzed, most conveniently by gas chromatography, to determine the fraction remaining unchanged for each of the two hydrocarbons.

The "constraint index" is calculated as follows:

$$\text{Constraint Index} = \frac{\log_{10}(\text{fraction of n-hexane remaining})}{\log_{10}(\text{fraction of 3-methylpentane remaining})}$$

The constraint index approximates the ratio of the cracking rate constants for the two hydrocarbons. Zeolites suitable for the present invention are those having a constraint index in the approximate range of 1 to 12. Constraint Index (CI) values for some typical zeolites are:

| ZEOLITE | C.I. |
|---|---|
| ZSM-5 | 8.3 |
| ZSM-11 | 8.7 |
| ZSM-12 | 2 |
| ZSM-23 | 9.1 |
| ZSM-38 | 2 |
| ZSM-35 | 4.5 |
| Clinoptilolite | 3.4 |
| TMA Offretite | 3.7 |
| Beta | 0.6 |
| ZSM-4 | 0.5 |
| H-Zeolon | 0.4 |
| REY | 0.4 |
| Amorphous Silica-Alumina (non-zeolite) | 0.6 |
| Erionite | 38 |

The class of zeolites defined herein is exempliefied by ZSM-5, ZSM-11, ZSM-23, ZSM-35 and ZSM-38 and other similar materials. U.S. Pat. No. 3,702,886 describes and claims ZSM-5. ZSM-11 is described in U.S. Pat. No. 3,709,979. ZSM-12 is described in U.S. Pat. No. 3,832,449. ZSM-23 is described in U.S. Pat. No. 4,076,842. ZSM-35 is described in U.S. Pat. No. 4,016,245. ZSM-38 is described in U.S. Pat. No. 4,046,859.

In Fig. 1, a preferred embodiment of the present invention is generally described. Figure 1 identifies an FCC process unit A with an input gas oil feed stream 1 to a cracking reactor containing a fluidized stream of zeolite type catalyst and producing a hydrocarbon stream 2 containing essentially gasoline grade hydrocarbons. Within the FCC process unit spent FCC catalyst is oxidatively regenerated and a portion of either hot spent or regenerated catalyst is fed via 3 to heat transfer vessel B where it comes in contact with a low temperature stream rich in hydrogen 4 introduced into the heat transfer vessel from any source in the refinery producing or recovering excess hydrogen. In the heat transfer vessel the temperature of the hydrogen is elevated by contact with hot FCC catalyst and the FCC catalyst is recycled via 5 back to the FCC process unit. Hot "hydrogen" is fed via 6 to a catalyst regenerator vessel C where it is contacted with preferably a ZSM-5 of the type employed in vessel D for the conversion of oxygenates or olefins feed stream 9 to conversion products 10. From reactor C, hydrogen is recycled to heat exchange vessel B. When the conversion process is operating in a fluidized bed configuration, ZSM-5 catalyst is rejuvenated with hot hydrogen in vessel C and recycled via 7 to the conversion reactor D where it comes in contact with the aforenoted feedstock under conversion conditions. Deactivated catalyst from the converter is recycled 8 to vessel C for rejuvenation.

Optionally, light olefins, such as $C_2^=$ to $C_4^=$, can be added via 12 to the hot hydrogen prior to feeding to vessel C to enhance catalyst rejuvenation by dealkylating large molecules within the catalyst pores allowing those molecules to be stripped. Preferably, about 10 wt % of light olefins can be added, based on hydrogen.

Referring now to Fig. 2, a more detailed description of the invention is illustrated involving two preferred embodiments. An essential feature common to both embodiments is the use of hot recirculating FCC catalyst to transfer heat to a hydrogen stream in order to employ that hot hydrogen stream in the rejuvenation of preferably ZSM-5 catalyst used in hydrocarbon conversion reactions. The two preferred embodiments are distinguished primarily by the source of hot recirculating FCC catalyst used for heat transfer and the benefits which accrue in total to the FCC process by synergistically co-joining FCC and the conversion process through the FCC regeneration and rejuvenation functions.

In Fig. 2, E and F represent the FCC reactor and catalyst regenerator, respectively. G is the heat exchange vessel described as B in Fig. 1. Typically, gas oil enters 7 the FCC riser and is cracked to provide primarily gasoline range hydrocarbons exiting 8 the reactor. From regenerator F, regenerated F, regenerated catalyst is recycled to the FCC reactor riser. In a first optional embodiment, a portion of the spent FCC catalyst exiting the cracking reactor at a temperature between 482°C and 538°C (900°F and 1000°F) is fed 1 to heat exchange vessel G. The spent FCC catalyst is preferably of the X or Y zeolite type modified by the inclusion of heavy metals thereon, but particularly of the platinum/palladium group. Commonly, in addition to deactivating coke and carbonaceous deposits, the spent FCC catalyst contains hydrocarbon product entrained within, residual from the stripping operation. The hot spent catalyst is contacted with hydrogen in the heat exchange vessel in a dilute stream at a hydrogen inlet temperature between 93°C and 260°C (200°F and 500°F) and at a pressure of 276 to 2170 kPa (25 to 399 psig), but preferably at a temperature of 149°C (300°F) and 379 kPa (40 psig). The hydrogen stream 2 may be provided from any available source within the refinery where the stream comprises at least 40 to 99% hydrogen, but preferably not less than 60% hydrogen. The stream may be preheated to the desired inlet temperature range to the heat transfer vessel. Within the heat transfer vessel, entrained hydrocarbon product is stripped from the spent FCC catalyst by the hydrogen stream and the temperature of that stream is raised to between 427°C (800°F) and 593°C (1100°F) by heat transfer with hot, spent catalyst. Spent, stripped, FCC catalyst of lower temperature is separated and returned 3 to the FCC reactor E. The hydrogen hydrocarbon stream 4, or hydrogen stream, exiting the heat exchange vessel is disengaged from FCC catalyst using appropriate cyclones or filters and fed to, preferably, a M2-Forming ZSM-5 catalyst reactivator. The entering hydrogen stream to the reactivating vessel may be preheated to a temperature between 482°C (900°F) to 788°C (1450°F), but preferably 732°C (1350°F), as required. The hydrogen stream contacts fluidized, spent ZSM-5 catalyst from the M2-Forming reactor and rejuvenates that catalyst by stripping coke and carbonaceous deposits therefrom. The rejuvenated catalyst is returned to the M2-Forming reactor and the hydrogen stream, following separation of coke and co-mingled hydrocarbon product, is recycled 5 to heat exchange vessel G. A key advantage of hydrogen rejuvenation of M2-Forming catalyst as presented in the instant invention, when compared with conventional oxidative regeneration methods, is the total control of the degree of carbon/hydrogen removal from the M2-Former catalyst provided through hydrogen rejuvenation. Coke may be stripped from the ZSM-5 catalyst to a preferred degree since the preponderance of coke on the catalyst is generally of a soft and strippable variety. Removing coke by combustion during oxidative regeneration of catalyst is essentially indiscriminate and substantially less manageable. Further, as mentioned heretofore, hydrogen rejuvenation avoids hydrothermal deterioration of catalyst caused by water in the combustion gases.

Referring again to Fig. 2, in a second preferred embodiment, FCC catalyst is fed 11 to the heat exchange vessel G from the catalyst regenerator vessel F after regeneration at a temperature between 482°C (900°F) and 760°C (1400°F), but preferably at 732°C (1350°C). As described heretofore, heat exchange is allowed to occur between the hot FCC regenerated catalyst and an inlet hydrogen stream 2 entering at a temperature between 93°C (200°F) and 260°C (500°F). In this embodiment, heavy metals on the FCC regenerated catalyst, preferably platinum/palladium, which had been oxidized during the FCC catalyst regeneration process are reduced to provide active platinum and palladium, thereby converting the regnerated FCC catalyst to the native catalyst from most appropriate to enhance the yield of higher octane gasoline fraction from the FCC reactor. From the heat exchange vessel the regenerated FCC catalyst is fed via 10 to the FCC reactor employing commonly light hydrocarbon lift gases 6. Generally, such gases contain a substantial proportion of aromatizable hydrocarbons which, in the presence of regenerated FCC catalyst containing reduced platinum thereon, provide a higher yield of aromatic product, representing a significant source of octane enrichment of the reactor products.

The treatment and utilization of hydrogen gases exiting the heat exchange vessel B of Fig. 1 after contacting regenerated FCC catalyst is analogous to that embodiment utilizing heat exchange transfer with spent FCC catalyst described above. In each case, hot hydrogen is used to rejuvenate, preferably ZMS-5 catalyst, whether employed in the M2-Forming process, the MTG process, MTO or MOGD.

In the embodiments of the present invention it is obvious to a skilled worker that spent catalyst from the FCC reactor and FCC regenerator catalyst may be passed to the heat exchange vessel for heat exchange with hydrogen either separately or jointly. In either case, FCC catalyst containing metals such as platinum, palladium in an oxidized state will be reduced to a form to promote aromatization reactions in the FCC cracking reactor. Typically, these streams constitute a minor portion of the circulating FCC catalyst stream.

While the certain embodiment described herein has been a co-joining of FCC with a fluidized conversion process, i.e., M2-Forming, it is obvious to one skilled in the art that the invention is equally applicable to the hydrogen rejuvenation of ZSM-5 catalysts employed in a fixed bed configuration process. In the case of fixed bed processes, alternate or swing reactors can be employed wherein one vessel serves as a reactivation vessel for the fixed catalyst bed therein while the second vessel serves as the conversion reactor. Through appropriate valuing and controls the hot hydrogen stream from heat exchange vessel B may be directed to whichever vessel is functioning in a catalyst reactivation mode.

It is to be understood that the foregoing description is merely illustrative of preferred embodiments of the invention of which many variation may be made by those skilled in the art within the scope of the following claims without departing from the spirit thereof.

**Claims**

1. An integrated process for the reactivation of FCC catalyst and spent acidic, shape selective metallosilicate zeolite conversion catalyst from a conversion zone for the conversion of light olefins and light aliphatic oxygenates to gasoline and distillate boiling range hydrocarbons, comprising:

(a) contacting under heat transfer conditions a hydrogen-rich feedstream at low inlet temperature and fluidized catalyst stream from an FCC catalyst regenerator comprising FCC catalyst particles containing heavy metal oxides at elevated inlet temperature whereby the heavy metal oxides are reduced and the hydrogen-rich feedstream temperature is elevated;

(b) separating the effluent stream from step (a) into a first stream comprising FCC catalyst and a second stream comprising substantially hydrogen at elevated temperature;

(c) contacting under aromatizing conditions the first stream of step (b) and a FCC catalyst fluidizing lift stream comprising light hydrocarbon feed gas and feeding to a gas oil FCC reactor;

(d) contacting under reactivating conditions in a reactivating zone and second stream at elevated temperature and the spent metallosilicate conversion catalyst from the conversion zone for the conversion of light olefins or light aliphatic oxygenates;

(e) withdrawing the reactivated conversion catalyst from the reactivating zone and returning the reactivated catalyst to the conversion zone under conversion conditions.

2. A process according to claim 1 wherein the catalyst stream of step (a) has an inlet temperature of 650°C to 800°C.

3. A process according to claim 1 or 2 wherein the hydrogen-rich stream inlet temperature is 93°C to 260°C.

4. The process of any one of claims 1-3 wherein the fluidized catalyst stream of step (a) comprises x-zeolite or y-zeolite FCC catalyst particles.

5. The process of any one of the preceding claims wherein the FCC catalyst particles contain platinum group metals, vanadium or iron.

6. The process according to any one of the preceding claims wherein the light hydrocarbon feed gas comprises $C_1$-$C_4$ paraffins and olefins.

7. The process of claim 1 wherein the second stream of step (b) has a temperature of 427°C to 788°C and the conversion catalyst reactivating zone has a temperature of 482°C to 760°C.

8. A process for the rejuvenation of FCC catalyst and spent acidic, shape selective metallosilicate zeolite conversion catalyst from a conversion zone for the conversion of light olefins and light aliphatic oxygenates to gasoline and distillate boiling range hydrocarbons, comprising:

(a) contacting under heat transfer conditions a hydrogen-rich stream at reduced inlet temperature and a fluidized catalyst stream comprising FCC catalyst particles at elevated inlet temperature from an FCC catalyst regenerator;

(b) separating the effluent stream of step (a) into a first stream comprising FCC catalyst and a second stream comprising substantially hydrogen at elevated temperature;

(c) returning the first stream of step (b) to the FCC process reactor;

(d) contacting under rejuvenating conditions in rejuvenating zone the second stream of step (b) at elevated temperature with the spent metallosilicate catalyst from the conversion zone;

(e) withdrawing the rejuvenated metallosilicate catalyst from rejuvenating zone and returning the catalyst to the conversion zone under conversion conditions.

9. the process of claim 8 wherein the inlet temperatue of the fluidized catalyst stream in step (a) is 343°C to 427°C.

10. A process of claim 8 or 9 wherein the inlet temperature of step (a) hydrogen-rich stream is 93°C to 260°C.

11. The process of claim 8, 9 or 10 wherein the hydrogen stream temperature in step (b) is 427°C to 788°C and the temperature in the conversion catalyst rejuvenating zone is 482°C to 732°C.

12. The process of any of the preceding claims wherein the conversion catalyst comprises ZSM-5.

13. The process of any of the preceding claims wherein fluidized catalyst stream of step (a) comprises spent FCC catalyst particles at elevated temperature from an FCC stripper.

14. The process of claim 13 wherein the spent FCC catalyst stream temperature is 482°C to 538°C.

# FIG. 1

EP 0 309 219 A1

------------- "SPENT" CATALYST
──/──/── REGENERATED CATALYST

## FIG. 2

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | US-A-4 364 848  (C. CASTILLO) | | B 01 J  29/38 |
| A | DE-B-1 276 009  (ESSO RESEARCH AND ENGINEERING) | | |
| A | US-A-3 254 021  (R.B. MASON) | | |
| A | EP-A-0 009 894  (MOBIL OIL) | | |
| A,P | US-A-4 508 836  (W.O. HAAG) | | |

TECHNICAL FIELDS
SEARCHED (Int. Cl.4)

B 01 J  29/00

The present search report has been drawn up for all claims

| Place of search | Date of completion of the search | Examiner |
|---|---|---|
| THE HAGUE | 14-12-1988 | DEVISME F.R. |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

&  : member of the same patent family, corresponding
    document

EPO FORM 1503 03.82 (P0401)